# EUROPÄISCHE PATENTSCHRIFT

(11) **EP 0 480 974 B1**
(45) Veröffentlichungstag und Bekanntmachung des Hinweises auf die Patenterteilung: **02.03.1994**
(21) Anmeldenummer: 90910655.1
(22) Anmeldetag: 29.06.1990
(51) Int. Cl.: F16K 11/16, F16K 11/074

(54) **VERTEILERVORRICHTUNG**
DISTRIBUTOR DEVICE
DISPOSITIF DE DISTRIBUTION

(30) Priorität: 03.07.1989 DE 3921829
(43) Veröffentlichungstag der Anmeldung: 22.04.1992
(73) Patentinhaber: GRAMM, Gerhard, D-75233 Tiefenbronn (DE)
(72) Erfinder: GRAMM, Gerhard, D-75233 Tiefenbronn (DE)
(74) Vertreter: Jeck, Anton, Dipl.-Ing.
(86) Internationale Anmeldenummer: EP9001047
(87) Internationale Veröffentlichungsnummer: WO9100462

(56) Entgegenhaltungen:
- FR-A- 1 394 464
- FR-A- 1 544 824
- US-A- 2 837 115

## Beschreibung

Die Erfindung betrifft eine Verteilervorrichtung zum wahlweisen Verbinden einer von mehreren ankommenden Leitungen mit einer abgehenden Leitung sowie einer ankommenden Leitung mit einer von mehreren abgehenden Leitungen.

Verteilervorrichtungen der eingangs genannten Art sind bekannt und z.B. in der DE-A- 35 45 681 beschrieben. Dabei besitzt die Verteilervorrichtung mehrere ankommende sowie entsprechend viele abgehende Leitungen, so daß eine Relativverdrehung der Körper gegeneinander um 360° oder mehr nur dann möglich ist, wenn die Leitungen aus elastisch verformbaren Werkstoffen bestehen und hinreichend lang sind. Ein weiterer Nachteil, mit dem die bekannte Vorrichtung behaftet ist, besteht darin, daß die Anzahl der verschiedenen mediumleitenden Verbindungen relativ gering ist.

Ferner ist in der DE-A-35 09 764 eine Vorrichtung zum wahlweisen Verbinden von Leitungen für fließfähige Medien beschrieben und nach Art eines Linearschiebers ausgebildet, dessen Teile lineare Hin- und Herbewegungen ausüben, und zwar auch dann, wenn zwei Linearschieber, die in einem gemeinsamen Gehäuse untergebracht sind, miteinander zusammenarbeiten.

Ausgehend von dem obigen Stand der Technik liegt der Erfindung die Aufgabe zugrunde, die gattungsgemäße Verteilervorrichtung ohne unangemessenen konstruktiven Aufwand so weiterzubilden, daß auf engstem Raum mehrere Verbindungen zwischen Mediumquellen und Verbrauchern herstellbar sind.

Die gestellte Aufgabe wird erfindungsgemäß durch mindestens zwei an die Leitungen anschließbare und räumlich voneinander getrennte Steuerorgane mit jeweils einem ortsfesten und den ankommenden bzw. abgehenden Leitungen verbindbaren Körper sowie einem mit Bezug auf diesen verdrehbaren, mehrere Arbeitsstellungen einnehmenden und an die abgehenden bzw. ankommenden Leitungen anschließbaren Körper gelöst, dessen Leitung in seinen Arbeitsstellungen mit jeweils einer Leitung des ortsfesten Körpers mediumführend ist.

Man erkennt, daß die Erfindung jedenfalls dann verwirklicht ist, wenn die an mehrere Leitungen anschließbaren Körper
- das sind meistens die mit Mediumquellen verbindbaren Körper
- ortsfest angeordnet sind, während die mit den Verbrauchern verbindbaren Leitungen mit den drehbaren Körpern Lösbar verbindbar sind.

Weitere zweckmäßige und vorteilhafte Ausgestaltungen der Erfindung gehen aus den Unteransprüchen hervor.

Eine besonders zweckmäßige Ausgestaltung sieht vor, daß die verdrehbaren Körper von mindestens einem Stellmotor angetrieben sind. Handelt es sich um eine Verteilervorrichtung, deren verdrehbaren Körper aus kreisrunden Scheiben gebildet sind, dann ist es zweckmäßig, wenn die radialen Außenseiten der Körper als Zahnräder ausgebildet sind, die mit einem Zahnrad des Motors zusammenarbeiten. Bei dieser einfachsten Ausgestaltung der Erfindung besteht auch die Möglichkeit, daß der Motor mit dem Zahnrad des einen drehbaren Körpers kämmt, während dieser Körper mit dem anderen drehbaren Körper kämmt. In beiden Fällen wird erreicht, daß die drehbaren Körper gegenläufig sind.

Die Verteilervorrichtung kann selbstverständlich auch aus mehreren Steuerorganen, z.B. drei, vier usw., bestehen. Hierbei sind die drehbaren Körper über Zahnräder miteinander verbindbar, die zwischen einer wirksamen, mit den drehbaren Körpern zusammenarbeitenden, und einer unwirksamen Arbeitsstellung, in der sie mit den drehbaren Körpern nicht zusammenarbeiten, verstellbar sind.

Soll die Verteilervorrichtung bei einer Anlage mit mehreren Mediumquellen und Verbrauchern eingesetzt werden, dann ist es zweckmäßig, wenn der Stellmotor sowie die mit einer Stelleinrichtung zusammenarbeitenden Zahnräder an eine zentrale Steuerungseinrichtung anschließbar sind. Bei der Steuerungseinrichtung kann es sich um eine Computeranlage handeln, durch die nicht nur die Art der Verbindung, sondern auch ihre Dauer gesteuert werden kann.

Eine besonders zweckmäßige Ausgestaltung der Erfindung sieht vor, daß der ortsfeste Körper mehrere kreisrunde Durchbrüche mit nach außen abstehenden Anschlußstutzen besitzt, an welche die Leitungen anschließbar sind und die denselben Abstand von der Drehachse des drehbaren Körpers besitzen, und daß der jeweilige Körper einen einzigen kreisrunden Durchbruch mit einem sich an ihn anschließenden Stutzen besitzt, der in den Arbeitsstellungen des drehbaren Körpers mit einem der Durchbrüche des ortsfesten Körpers fluchtet. Hierbei können diese Maßnahmen auch so getroffen sein, daß der Durchbruch des ortsfesten Körpers und/oder die Durchbrüche des verdrehbaren Körpers von Dichtungskörpern umgeben sind.

Ein Ausführungsbeispiel der Erfindung ist in der Zeichnung schematisch dargestellt und wird im folgenden näher erläutert. Es zeigen
- Fig. 1: eine an einen Verbraucher angeschlossene Verteilervorrichtung im Axialschnitt,
- Fig. 2: eine Draufsicht der Verteilervorrichtung in Richtung des Pfeiles II nach Fig. 1 und
- Fig. 3: eine Draufsicht der Verteilervorrichtung in Richtung des Pfeiles III nach Fig. 1.

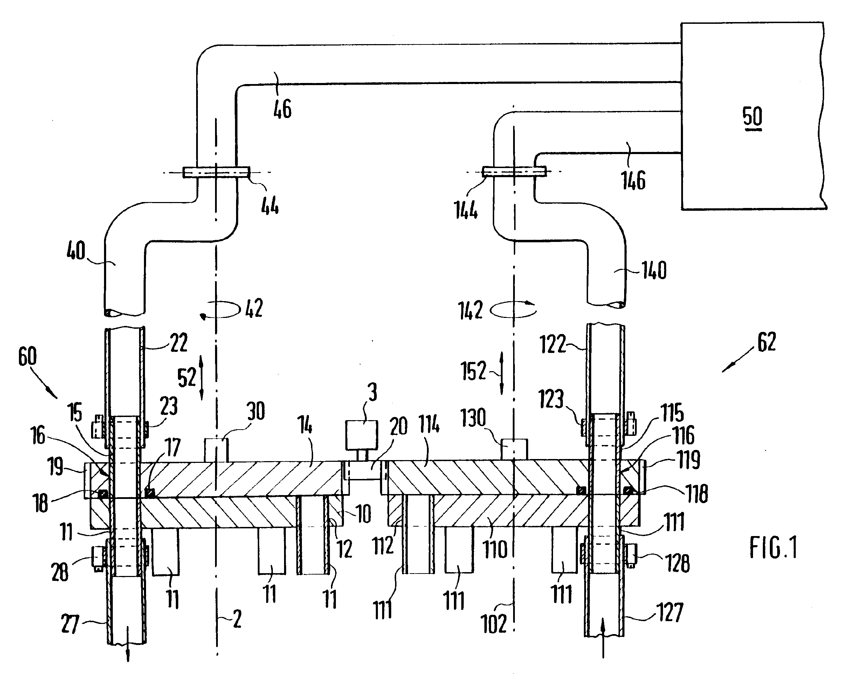

Die in Fig. 1 dargestellte Verteilervorrichtung besteht aus zwei spiegelbildlich gleichen Steuerorganen 60 und 62, die aus jeweils einem ortsfesten Körper 10 und 110 sowie einem verdrehbaren Körper 14 und 114 bestehen.

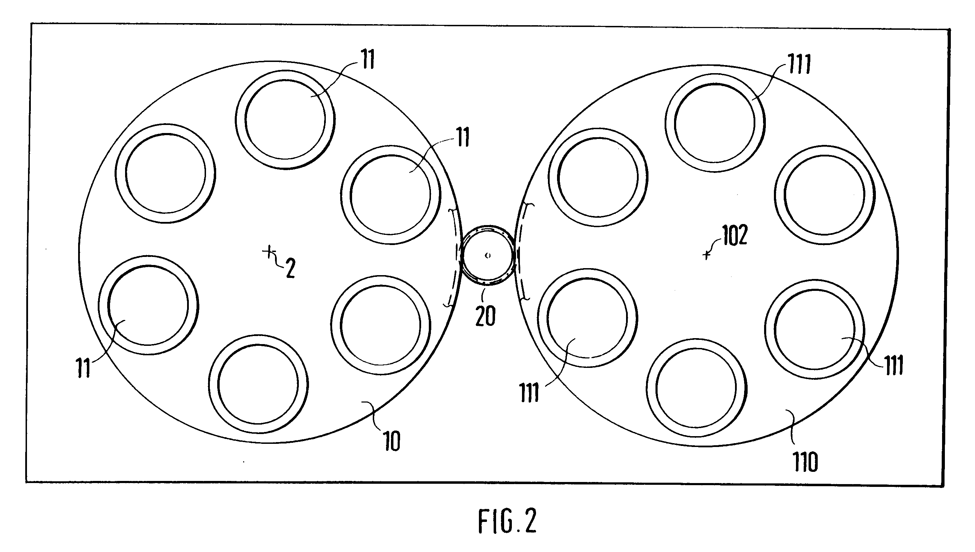

Das in Fig. 1 dargestellte Steuerorgan 62 ist an eine nicht näher dargestellte Mediumquelle sowie an einen Verbraucher 50 angeschlossen. Das Medium wird dem Steuerorgan 62 über die Leitung 127, die an einen Stutzen 111 mittels einer Klemmschelle 128 angeschlossen ist, zugeführt. Der ortsfeste Körper 110 besitzt mehrere Anschlußstutzen 111, wie insbesondere Fig. 2 zeigt. Der verdrehbare Körper 114 besitzt einen einzigen Durchbruch 116, in dem ein Stutzen 115 eingesetzt ist, der mit der Leitung 122 über eine Klemmschelle 123 verbunden ist.

An die Leitung 122 schließt sich die Leitung 140 an, die über einen Drehflansch 144 mit der Leitung 146 mediumführend verbunden ist. Der drehbare Körper 114 ist um die vertikale Achse 102 in Richtung des Pfeiles 142 verdrehbar. Gelagert ist der drehbare Körper 114 im Lagerkörper 130. An seiner radialen Außenseite besitzt der drehbare Körper 114 ein Zahnrad 119, das mit dem Zahnrad 20 des Motors 3 kämmt. Wird nun der drehbare Körper 114 um seine Achse 102 verdreht, dann dreht sich auch die Anschlußleitung 140 im Drehflansch 144, durch den eine drehbare Verbindung zwischen der Leitung 140 und der Leitung 146 herstellbar ist.

Wie bereits erwähnt, ist das in Fig. 1 dargestellte linke Steuerorgan 60 spiegelbildlich zu dem Steuerorgan 62 ausgebildet, so daß es mehrere Anschlußstutzen 11 besitzt, die mit abgehenden Leitungen 27 mittels Klemmschellen 28 verbindbar sind. Die radiale Außenseite des drehbaren Körpers 14 besitzt ein Außenzahnrad 19. Der drehbare Körper 14 besitzt eine einzige Bohrung 16, in der ein Stutzen 15 angeordnet und vom Dichtungsring 18 umgeben ist. Der Dichtungsring 118 hat die gleiche Funktion wie der Dichtungsring 18. Der Stutzen 15 ist mit der ankommenden Leitung 22 über eine Klemmschelle 23 lösbar verbindbar. Die ankommende Leitung 22 ist mit der Leitung 44 verbunden, die ihrerseits mit der Leitung 46 über den Drehflansch 44 drehbar verbindbar ist. Der drehbare Körper 14 bzw. 114 kann mit einem Stellmotor zusammenarbeiten, der ihn in Richtung des Pfeiles 52 bzw. 152 taktweise verstellen kann. Beim Einschalten des Motors 3 bewegt sich der in Fig. 1 dargestellte linke drehbare Körper in Richtung des Pfeiles 42, während der rechte drehbare Körper 114 in Richtung des Pfeiles 142 verdreht wird. In beiden Fällen ist es wichtig, daß der Drehflansch 44 bzw. 144 eine Drehachse besitzt, die mit der Drehachse 2 bzw. 102 identisch ist bzw. parallel verläuft. Dadurch wird verhindert, daß die Leitung 40 bzw. 140 mechanisch beansprucht wird. Diese wohl einfachste Ausfuhrung der Erfindung kann z.B. so erweitert werden, daß mehrere Steuerorgane 60 und 62 miteinander verbunden werden. Dabei können die Steuerorgane von einem gemeinsamen Motor 3 angetrieben werden, wobei die Drehbewegung von einem drehbaren Körper zum anderen über Zahnräder erfolgen kann, die wirksame bzw. unwirksame Arbeitsstellungen einnehmen können. So kann gezielt ein bestimmtes Steuerorgan vom Motor 3 getrennt werden. Auf diese Weise kann eine Vielzahl von medienführenden Anschlüssen hergestellt werden, ohne dabei die Verteilervorrichtung deutlich größer ausbilden zu müssen.

Die Fig. 2 zeigt, daß die Anschlußstutzen 11 bzw. 111 gleichmäßig um die Drehachse 2 bzw. 102 verteilt sind.

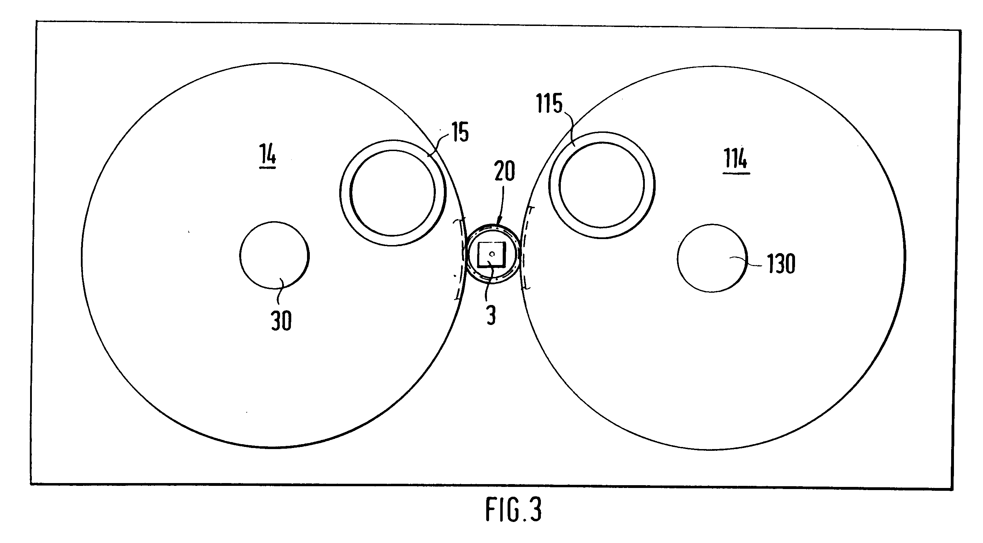

Die Fig. 3 zeigt, daß der drehbare Körper 14 bzw. 114 nur einen einzigen Stutzen 15 bzw. 115 besitzt, der auf die Maße des Stutzens 11 bzw. 111 abgestimmt ist.

## Patentansprüche

1. Verteilervorrichtung zum wahlweisen Verbinden einer von mehreren ankommenden Leitungen mit einer abgehenden Leitung sowie einer ankommenden Leitung mit einer von mehreren abgehenden Leitungen,
gekennzeichnet durch
mindestens zwei an die Leitungen (22,27,122,127) anschließbare und räumlich voneinander getrennte Steuerorgane mit jeweils einem ortsfesten und den ankommenden bzw. abgehenden Leitungen (27,127) verbindbaren Körper (10,110) sowie einem mit Bezug auf diesen verdrehbaren, mehrere Arbeitsstellungen einnehmenden und an die abgehenden bzw. ankommenden Leitungen (22,122) anschließbaren Körper (14,114), dessen Leitung (22,122) in seinen Arbeitsstellungen mit jeweils einer Leitung (27,127) des ortsfesten Körpers (10,110) mediumführend verbindbar ist.

2. Verteilervorrichtung nach Anspruch 1,
dadurch gekennzeichnet,
daß die verdrehbaren Körper (14,114) von mindestens einem Stellmotor (3) angetrieben sind.

3. Verteilervorrichtung nach Anspruch 1 oder 2,
dadurch gekennzeichnet,
daß die verdrehbaren Körper (14,114) von einem gemeinsamen Motor (3) angetrieben sind.

4. Verteilervorrichtung nach einem der Ansprüche 1 bis 3, deren verdrehbaren Körper aus kreisrunden Scheiben gebildet sind,
dadurch gekennzeichnet,
daß die radialen Außenseiten der Körper (14,114) als Zahnräder (19,119) ausgebildet sind, die mit einem Zahnrad (20) des Motors zusammenarbeiten.

5. Verteilervorrichtung nach einem der Ansprüche 1 bis 4 mit mindestens drei Steuerorganen,
dadurch gekennzeichnet,
daß die drehbaren Körper miteinander über Zahnräder verbindbar sind und
daß die Zahnräder zwischen einer wirksamen, mit den drehbaren Körpern zusammenarbeiten, und einer wirksamen Arbeitsstellung, in der die mit den drehbaren Körper nicht zusammenarbeiten, verstellbar sind.

6. Verteilervorrichtung nach einem der Ansprüche 1 bis 5,
dadurch gekennzeichnet,
daß der Stellmotor (3) sowie die mit einer Stelleinrichtung zusammenarbeitenden Zahnräder an eine zentrale Steuerungseinrichtung anschließbar sind.

7. Verteilervorrichtung nach einem der Ansprüche 1 bis 6,
dadurch gekennzeichnet,
daß der ortsfeste Körper (10,110) mehrere kreisrunde Durchbrüche mit nach außen abstehenden Anschlußstutzen besitzt, an welche die Leitungen (27,127) anschließbar sind und die denselben Abstand von der Drehachse (2,102) des drehbaren Körpers (14,114) besitzen, und
daß der drehbare Körper (14,114) einen einzigen kreisrunden Durchbruch mit einem sich an ihn anschließenden Stutzen (15,115) besitzt, der in den Arbeitsstellungen des drehbaren Körpers (14,114) mit einem der Durchbrüche des ortsfesten Körpers (10,110) fluchtet.

8. Verteilervorrichtung nach einem der Ansprüche 1 bis 7,
dadurch gekennzeichnet,
daß der Durchbruch des ortsfesten Körpers (10,110) und/oder die Durchbrüche des verdrehbaren Körpers (14,114) von Dichtungskörpern umgeben sind.

9. Verteilervorrichtung nach einem der Ansprüche 1 bis 8, die an Mediumquellen und mindestens einen Verbraucher anschließbar ist,
dadurch gekennzeichnet,
daß in der vom Verbraucher (50) abgehenden Leitung eine Unterdruckpumpe geschaltet ist.

10. Verteilervorrichtung nach einem der Ansprüche 1 bis 9,
dadurch gekennzeichnet,
daß die Achsen (2,102) der drehbaren Körper (14,114) parallel zueinander verlaufen.

11. Verteilervorrichtung nach einem der Ansprüche 1 bis 10,
dadurch gekennzeichnet,
daß die drehbaren Körper (14,114) in ihrer Achsrichtung verstellbar sind.

## Claims

1. Distributor device for optional connection of one of a plurality of incoming lines to an outgoing line, as well as for connecting an incoming line with one of a plurality of outgoing lines, characterised by at least two control elements, connectable to the lines (22, 27, 122, 127) and spatially separated from one another, each with one body (10, 110) which is fixed, and is connectable to the incoming or outgoing lines (27, 127), and to a body (14, 114) which is rotatable relative to said body (10, 110), can adopt a plurality of working positions, and is connectable to the outgoing or incoming lines (22, 122), the line (22,122) of said body (14, 114) being connectable, in its working positions, respectively with a line (27, 127) of the fixed body (10, 110) in such a way as to transmit medium.

2. Distributor device according to claim 1, characterised in that the rotatable bodies (14, 114) are driven by at least one servo motor (3).

3. Distributor device according to claim 1 or 2, characterised in that the rotatable bodies (14, 114) are driven by a common motor (3).

4. distributor according to one of claims 1 to 3, whose rotatable bodies are formed by circular discs, characterised in that the radial external sides of the bodies (14, 114) are in the form of gearwheels (19, 119) which operate in conjunction with a gearwheel (20) of the motor .

5. Distributor device according to one of claims 1 to 4 with at least three control elements, characterised in that the rotatable bodies are connectable together via gearwheels, and in that the gearwheels are displaceable between an operative working position in which they operate in conjunction with the rotatable bodies, and an operative position in which they do not operate in conjunction with the rotatable bodies.

6. Distributor device according to one of claims 1 to 5, characterised in that the servo motor (3), and the gearwheels operating in conjunction with an adjusting device, are connectable to a central control device.

7. Distributor device according to one of claims 1 to 6, characterised in that the fixed body (10, 110) has a plurality of circular apertures with an outwardly-projecting line union to which the lines (27, 127) may be connected, and are at the same spacing from the axis of rotation (2, 102) of the rotatable body (14, 114), and in that the rotatable body (14, 114) has a single circular aperture with a union (15, 115) connected thereto, which, in the operative positions of the rotatable body (14, 114), lies flush with one of the apertures in the fixed body (10, 110).

8. Distributor device according to one of claims 1 to 7, characterised in that the aperture in the fixed body (10, 110) and/or the apertures in the rotatable body (14, 114) are surrounded by sealing means.

9. Distributor device according to one of claims 1 to 8, which is connectable to medium sources and to at least one consumer device, characterised in that a vacuum pump is incorporated in the line going out from the consumer device (50).

10. Distributor device according to one of claims 1 to 9, characterised in that the axes (2, 102) of the rotatable body (14, 114) extend parallel to one another.

11. Distributor device according to one of claims 1 to 10, characterised in that the rotatable bodies (14, 114) are adjustable in their axial direction.

## Revendications

1. Dispositif de distribution pour le raccordement à volonté d'un ou de plusieurs conduites d'arrivée à une conduite de sortie ainsi que d'une conduite d'arrivée à l'une de plusieurs conduites de sortie,
caractérisé par le fait
qu'au moins deux organes de commande pouvant être raccordés aux conduites (22, 27, 122, 127) et séparés spatialement les uns des autres comprennent chacun à un élément fixe (10, 110) pouvant être raccordé aux conduites d'arrivée ou aux conduites de sortie (27, 127) ainsi qu'un élément rotatif (14, 114) par rapport audit élément fixe, élément rotatif susceptible d'occuper plusieurs positions de travail et susceptible d'être raccordé aux conduites de sortie ou d'arrivée (22, 122), dont la conduite (22, 122) peut dans ses positions de travail être raccordée à transmission de fluide à une conduite (27, 127) de l'élément fixe (10, 110).

2. Dispositif de distribution suivant la revendication 1,
caractérisé par le fait
que les éléments rotatifs (14, 114 ) sont entraînés par au moins un servo-moteur (3).

3. Dispositif de distribution suivant la revendication 1 ou la revendication 2,
caractérisé par le fait
que les éléments rotatifs (14, 114) sont entraînés par un moteur commun (3).

4. Dispositif de distribution suivant l'une quelconque des revendications de 1 à 3, dont les éléments rotatifs sont constitués par des disques circulaires,
caractérisé par le fait
que les faces extérieures radiales des éléments (14, 114) ont la forme de roues dentées (19, 119) qui coopèrent avec une roue dentée (20) du moteur.

5. Dispositif de distribution suivant l'une quelconque des revendications de 1 à 4 avec au moins trois organes de commande,
caractérisé
par le fait que les éléments rotatifs peuvent être reliés mutuellement par l'intermédiaire de roues dentées, et
par le fait que les roues dentées peuvent être déplacées d'une position de travail active dans laquelle elles coopèrent avec les éléments rotatifs vers une position active dans laquelle elles ne coopèrent pas avec les éléments rotatifs.

6. Dispositif de distribution suivant l'une quelconque des revendications de 1 à 5
caractérisé par le fait
que le servo-moteur (3) ainsi que roues dentées coopérant avec un dispositif de réglage peuvent être raccordés à un dispositif de commande central.

7. Dispositif de distribution suivant l'une quelconque des revendications de 1 à 6,
caractérisé
par le fait que l'élément fixe présente plusieurs passages circulaires avec des tubulures de raccord faisant protubérance vers l'extérieur, auxquelles peuvent être raccordées les conduites (27, 127) et qui présentent la même distance de l'axe de rotation (2, 102) de l'élément rotatif, et
par le fait que l'élément rotatif (14, 114) présente un seul passage circulaire avec une seule tubulure (15, 115) y raccordée, laquelle dans les positions de travail de l'élément rotatif (14, 114) est en alignement avec l'un des passages de l'élément fixe (10, 110).

8. Dispositif de distribution suivant l'une quelconque des revendications de 1 à 7,
caractérisé par le fait
que le passage de l'élément fixe (10, 110) et/ou les passages de l'élément rotatif (14, 114) sont entourés par des éléments d'étanchéité.

9. Dispositif de distribution suivant l'une quelconque des revendications de 1 à 8, qui peut être raccordé à des sources de fluide et à au moins une unité de consommation, caractérisé par le fait
que dans la conduite issue de l'unité de consommation (50) est montée une pompe à dépression.

10. Dispositif de distribution suivant l'une quelconque des revendications de 1 à 9,
caractérisé par le fait
que les axes (2, 102) des éléments rotatifs sont orientés parallèlement les uns aux autres.

11. Dispositif de distribution suivant l'une quelconque des revendications de 1 à 10,
caractérisé par le fait
que la direction axiale des éléments rotatifs (14, 114) est réglable.
